# EUROPEAN PATENT APPLICATION

(11) **EP 1 002 708 A1**
(43) Date of publication of application: **24.05.2000**
(21) Application number: 99309023.2
(22) Date of filing: 12.11.1999
(51) Int. Cl.: B60T 7/10

(54) **Vehicle parking brakes**

(30) Priority: 17.11.1998 GB 9825082
(71) Applicant: ROVER GROUP LIMITED, Warwick, Warwickshire CV34 6RG (GB)
(72) Inventor: Basnett, Michael Neil, Crickhowell, Powys NP8 1DS (GB)
(74) Representative: Wilson, Alan Stuart

(57) **Abstract**

A brake lever assembly (10) for a motor vehicle is disclosed having a variable pitch ratchet member (113, 213). This enables the distance between the distinct positions of engagement to be reduced as a brake lever (11) is move towards an applied position.

## Description

This invention relates to vehicle parking brakes, and in particular to driver operated actuator mechanisms used to apply a vehicle's parking brakes.

In most vehicles the parking brake actuating member, usually a lever, is arranged to be operated by hand and therefore is often referred to as a 'handbrake'. Although in most modern vehicles such handbrakes are pivotally connected to part of the body structure of the motor vehicle some vehicles are supplied with a handbrake 'lever' that is slidingly supported, such handbrakes normally being referred to as 'umbrella type'.

However, in vehicles fitted with an automatic transmission, it is also known to provide a foot operable lever to provide the same parking brake function.

Although it is usual for the parking brake to act upon one or more of the road wheels of the motor vehicle it is also known to provide a brake that acts upon a drive shaft of the motor vehicle. This latter type of brake often being referred to as a transmission brake.

It is common to provide a parking brake actuating member with a ratchet mechanism to retain it in any of a number of positions. In order to enable the driver to apply sufficiently high braking it is desirable for the pitch of the ratchet to be reasonably narrow. However, drivers generally prefer the sound and feel of a system in which the ratchet only produces a relatively low number of clicks as the handbrake is applied.

It is also known, for example from GB2301657, to use a ratchet which has no teeth in the region of travel of the handbrake lever where the handbrake is released.

According to the invention there is provided a motor vehicle parking brake actuator comprising an actuator member movable by a driver of the vehicle to operate a parking brake, and mounting means on which the actuator member is mounted, and a ratchet mechanism interposed between the actuating member and the mounting means to retain the mounting member in any of a number of distinct positions, wherein the actuating member is movable through a range of positions between a first position in which the parking brake is lightly engaged and a second position in which the parking brake is firmly engaged, and the ratchet mechanism has a pitch which decreases between the first position and the second position.

The invention will now be described by way of example with reference to the accompanying drawing of which:-
Figure 1 is a partly sectioned view of a prior art handbrake lever assembly;
Figure 2 shows a ratchet member according to a first embodiment of the invention; and
Figure 3 shows a ratchet member according to a second embodiment of the invention.

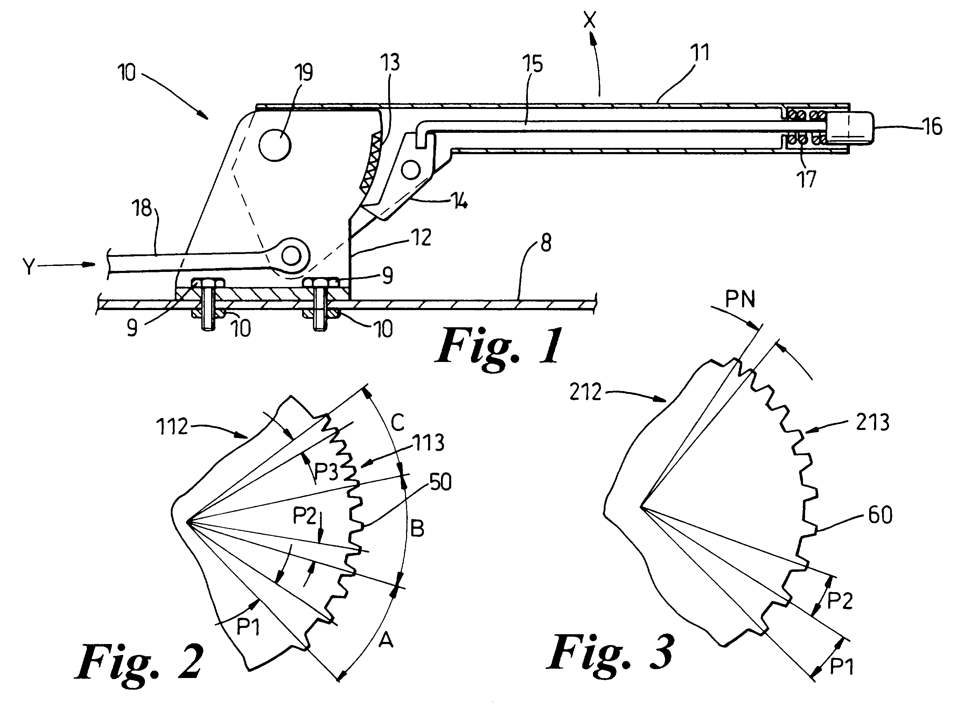

Referring to Figure 1, a handbrake lever assembly 10 has a brake lever 11 pivotally connected to a mounting bracket 12 by means of a pivot pin 19.

The mounting bracket 12 is attached to part of the body structure of a motor vehicle in this case a floor structure 8 by means of bolts 9.

The brake lever 11 pivotally supports a pawl 14 for engagement with a ratchet 13 formed as part of the mounting bracket 12. The pawl 14 and the ratchet 13 form a retaining means which can be selectively used to hold the brake lever 11 in a number of positions. The ratchet 13 has a number of teeth which define distinct positions of the brake lever corresponding to different degrees of engagement of the parking brake. The teeth are evenly spaced giving the ratchet a constant pitch.

The pawl 14 is moveable into and out of engagement with the ratchet member 13 by means of a rod 15 connected to a push button 16. The push button 16 is biased by a spring 17 so as to produce a pawl engaging force in the rod 15.

The brake lever 11 can be moved in a brake applying direction by applying a force to it in the direction of arrow 'X'. This causes the brake lever 11 to be rotated relative to the mounting bracket 12. There is no need to apply a pressure to the push button 16 as the pawl 14 is shaped to move from one tooth of the ratchet means to the next in the brake force applying direction.

A brake cable 18 is attached at one end to the brake lever 11 and is connected at its other end to a brake means (not shown) used to hold the motor vehicle in a stationary or parked position. By moving the brake lever in the direction of arrow 'X' the cable 18 is moved in the direction of arrow 'Y'. This movement takes the lever 11 through a first range of positions to remove any slack in the cable 18, a second range of positions to move the vehicle brakes from a fully released condition to a condition where a braking torque or force starts to be applied, and then over a third range of positions as the braking torque or force is increased. The ratchet is arranged to hold the lever 11 in a plurality of positions in the third range at least, and generally over a broader range of positions to allow for adjustment of the brakes.

To release the brake lever 11 from the applied position in which a braking force is generated, pressure is applied to the push button 16 which causes the rod 15 to urge the pawl 14 out of engagement with the ratchet member 13.

With particular reference to Figure 2 a brake lever assembly according to a first embodiment of the invention is similar to that shown in Figure 1, except for the ratchet 113 which is shown in Figure 2. The pitch of the teeth 50 on the ratchet 113 is not uniform, there being three series of teeth 50, each series being of a uniform pitch but no series having the same pitch as the pitch of the other series.

The first series 'A' of teeth 50 has a coarse pitch 'P1' so that a relatively large movement of the brake lever is required to move from one tooth 50 to the next. The second series 'B' of teeth 50 has a less coarse pitch 'P2' so that a smaller movement of the brake lever is required to move from one tooth 50 to the next compared to the series 'A'. The third series 'C' of teeth 50 has a fine pitch 'P3' so that a relatively small movement of the brake lever is required to move from one tooth 50 to the next. The pitch 'P1' is approximately twice that of the pitch 'P3'.

The effect of this change in pitch is that when the brake lever is moved from a released position to an applied position, initial movement of the lever produces very few clicks as the pawl rides over the teeth 50 but as the load increases only a small movement of the brake lever is required to move the pawl from one tooth to the next and so a finer control over the load applied can be achieved and an operator can move the lever to the next tooth without undue effort.

With reference to Figure 3 a ratchet 113 forming part of a brake lever assembly according to a second embodiment of the invention includes teeth of a continuously varying pitch.

The pitch 'P2' between the second and third teeth 60 is less than the pitch 'P1' between the first and second teeth 60 and this pattern is continued along the ratchet member 213 so that the pitch of the teeth 60 decreases along the ratchet member 213. This means that as the brake lever is moved from an unapplied position to an applied position the distance between the distinct positions of application reduces. The pitch 'P1' is approximately twice that of the pitch 'PN' between the last and the second to last teeth 60.

The effect of this progressive change in tooth pitch is that when the brake lever is moved from an unapplied position to an applied position, initial movement of the lever produces very few clicks as the pawl rides over the teeth 60 but as the load increases only a small movement of the brake lever is required to move the pawl from one tooth to the next and so a finer control over the load applied can be achieved and an operator can move the brake lever to the next tooth without undue effort.

Although the invention has been described with reference to a specific embodiment in which the brake lever is pivotally connected to the mounting bracket it will be appreciated that the lever could be arranged to slide with respect to its support, similarly the pawl could slide axially into and out of engagement rather than pivot.

It will be further appreciated that the invention is not limited to an arrangement in which the push button is pressed to release the brake lever but could also be used for 'fly-off' handbrakes where the push button has to be pressed to engage the pawl member with the ratchet member.

Although the invention has been described with reference to a single ratchet member having a variable pitch it will be appreciated that there could be several ratchet members each of different pitch with which the pawl can engage during different parts of its travel. The same variable pitch effect would then be produced.

## Claims

1. A motor vehicle parking brake actuator comprising an actuator member (11) movable by a driver of the vehicle to operate a parking brake, and mounting means (12) on which the actuator member is mounted, and a ratchet mechanism (13, 14) interposed between the actuating member and the mounting means to retain the mounting member in any of a number of discrete positions, wherein the actuating member is movable through a range of positions between a first position in which the parking brake is lightly engaged and a second position in which the parking brake is firmly engaged, characterized in that the ratchet mechanism (13, 14) has a pitch which varies such that the discrete positions get closer together as the actuation member (11) is moved from the first position to the second position.

2. An actuator according to claim 1 wherein said pitch varies continuously between said first position and said second position.

3. An actuator according to claim 1 wherein said pitch changes in one or more steps between said first position and said second position.

4. An actuator according to claim 3 wherein the ratchet mechanism has two or more series of teeth (A, B, C) each series having a plurality of teeth (50) of uniform pitch.

5. An actuator according to any of claims 1 to 4 in which the pitch varies by a factor of at least two over said range of positions.

6. An actuator according to any foregoing claim wherein the actuating member (11) is hand operated.

7. An actuator according to any foregoing claim wherein the ratchet mechanism comprises a ratchet (13) formed on the mounting means (12) and a pawl (14) mounted on the actuating member (11).

8. An actuator according to claim 7 wherein the pawl (14) is pivotally connected to the actuating member (11).
